(19) Europäisches Patentamt
European Patent Office
Office européen des brevets

(11) **EP 4 002 230 A1**

(12) **EUROPEAN PATENT APPLICATION**

(43) Date of publication:
**25.05.2022 Bulletin 2022/21**

(21) Application number: **21202388.1**

(22) Date of filing: **13.10.2021**

(51) International Patent Classification (IPC):
**G06N 20/00** (2019.01)   **G06N 5/00** (2006.01)
**G06N 5/02** (2006.01)   **G06N 5/04** (2006.01)

(52) Cooperative Patent Classification (CPC):
**G06N 20/00; G06N 5/003; G06N 5/025;
G06N 5/045**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **20.11.2020   CN 202011310775**

(71) Applicant: **FUJITSU LIMITED
Kawasaki-shi, Kanagawa 211-8588 (JP)**

(72) Inventors:
• **GAO, Yue
Beijing, 100027 (JP)**
• **ZHANG, Shu
Beijing, 100027 (JP)**
• **SUN, Jun
Beijing, 100027 (JP)**

(74) Representative: **Hoffmann Eitle
Patent- und Rechtsanwälte PartmbB
Arabellastraße 30
81925 München (DE)**

(54) **INFORMATION PROCESSING APPARATUS AND INFORMATION PROCESSING METHOD**

(57)   The present disclosure relates to an information processing apparatus and an information processing method for interpreting processing results of a machine learning model. The information processing apparatus comprises: an extraction unit configured to extract, based on the machine learning model and a training sample set of the machine learning model, rules for processing results of the training sample set; a screening unit configured to screen, based on the distribution of the training sample set and the distribution of the rules extracted by the extraction unit, the rules extracted by the extraction unit; and an interpretation unit configured to interpret, by using the rules screened by the screening unit, a processing result of the machine learning model on a single sample to be tested. According to the information processing technique of the present disclosure, it is possible to interpret the processing results of the machine learning model for different samples based on the correlation between features of the samples.

**FIG. 2**

EP 4 002 230 A1

**Description**

**FIELD OF THE INVENTION**

Embodiments disclosed in the present disclosure relate to the technical field of information processing. In particular, the embodiments of the present disclosure relate to an information processing apparatus and an information processing method for interpreting processing results of a machine learning model.

**BACKGROUND OF THE INVENTION**

With the development of machine learning technology, artificial intelligence has been widely popularized and applied in all walks of life. However, many machine learning models, such as artificial neural network models, are usually black box models. These black box models have extremely high accuracy, but cannot give specific rule interpretations, which thus makes it difficult for people to understand and trust prediction results of these black box models. In particular, when the black box models are applied to the fields of finance, security, transportation, medical treatment, etc., interpretability is an important measure of whether the black box models are trustworthy. For example, when the black box models are applied to the field of finance, it is necessary to inform business personnel how to market, and to inform risk control personnel how to identify risks, but not to only inform relevant personnel of prediction results of the black box models. An artificial intelligence model having near-perfect prediction performance but belonging to a black box may be prone to generating misleading decision-making, and may also incur system risks, leading to system vulnerabilities being attacked and thus becoming insecure.

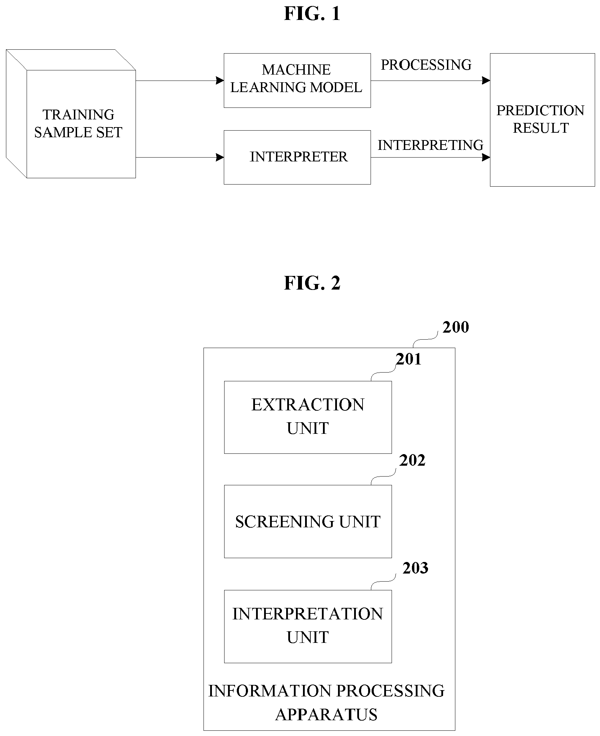

Therefore, there is a need for a technique that can interpret processing results of a machine learning model. FIG. 1 shows a schematic diagram of an interpreter that interprets prediction results of a machine learning model. As shown in FIG. 1, the machine learning model as a black box model processes sample data to obtain prediction results, and the interpreter analyzes features of the sample data to interpret the prediction results of the machine learning model.

The interpretable techniques of machine learning models can be divided into global interpretable technique and local interpretable technique. The global interpretable technique globally interprets the overall behavior of a sample data set or model, while the local interpretable technique interprets a single instance (sample). Since local data distribution may be inconsistent with global data distribution, the local interpretable technique can provide more accurate interpretable results and more personalized services for a single instance.

At present, as the local interpretable techniques, for example, LIME method and SHAP method have been applied. However, the current local interpretable techniques are all feature-based interpretable techniques, i.e., determining how features of samples affect prediction results of a machine learning model. Therefore, these local interpretable techniques ignore the correlation between features, which is not conducive to the understanding and trust of users.

Therefore, there is a need for a technique that can interpret processing results of a machine learning model as a high-precision black box model, which can give, or different samples, interpretable results based on the correlation between features.

**SUMMARY OF THE INVENTION**

A brief summary of the present disclosure will be given below to provide a basic understanding of some aspects of the present disclosure. It should be understood that the summary is not an exhaustive summary of the present disclosure. It does not intend to define a key or important part of the present disclosure, nor does it intend to limit the scope of the present disclosure. Its object is only to briefly present some concepts, which serve as a preamble of the detailed description that follows.

For the above-mentioned problems existing in the prior art, an object of the present application is to provide an information processing technique that can interpret, for different samples, processing results of a machine learning model based on the correlation between features of the samples.

In order to achieve the object of the present disclosure, according to one aspect of the present disclosure, there is provided an information processing apparatus for interpreting processing results of a machine learning model, the information processing apparatus comprising: an extraction unit configured to extract, based on the machine learning model and a training sample set of the machine learning model, rules for processing results of the training sample set; a screening unit configured to screen, based on the distribution of the training sample set and the distribution of the rules extracted by the extraction unit, the rules extracted by the extraction unit; and an interpretation unit configured to interpret, by using the rules screened by the screening unit, a processing result of the machine learning model on a single sample to be tested.

According to another aspect of the present disclosure, there is provided an information processing method for interpreting processing results of a machine learning model, the information processing method comprising the steps of: extracting, based on the machine learning model and a training sample set of the machine learning model, rules for processing results of the training sample set; screening, based on the distribution of the training sample set and the distribution of the rules extracted by the extraction unit, the extracted rules; and interpreting, by using the screened rules, a processing result of the machine learning model on a single sample to be tested.

According to still another aspect of the present disclosure, there is further provided a computer program capable of realizing the above-mentioned information processing method. In addition, there is further provided a computer program product in at least the form of a computer readable medium having recorded thereon computer program codes for implementing the above-mentioned information processing method.

According to the information processing technique of the present disclosure, it is possible to give, for a high-precision black box model, interpretable results about the correlation between sample-based features of different samples.

## BRIEF DESCRIPTION OF THE DRAWINGS

The above and other objects, features and advantages of the present disclosure will be more easily understood with reference to the following description of embodiments of the present disclosure in conjunction with the accompanying drawings. In the accompanying drawings:

FIG. 1 is a schematic diagram showing an interpreter that interprets prediction results of a machine learning model.

FIG. 2 is a block diagram showing the configuration of an information processing apparatus according to an embodiment of the present disclosure;

FIG. 3 is a schematic diagram showing processing performed by the information processing apparatus corresponding to FIG. 2;

FIG. 4 is a block diagram showing the configuration of an extraction unit shown in FIG. 2;

FIG. 5 is a block diagram showing the configuration of an interpretation unit shown in FIG. 2;

FIG. 6 is a diagram showing an example of processing results of an information processing apparatus according to an embodiment of the present disclosure;

FIG. 7 is a flowchart showing processing of an information processing method according to an embodiment of the present disclosure; and

FIG. 8 shows a schematic structural diagram of a general-purpose machine used to implement an information processing method and an information processing apparatus according to an embodiment of the present disclosure.

## EMBODIMENTS OF THE INVENTION

Hereinafter, some embodiments of the present disclosure will be described in detail with reference to the accompanying illustrative drawings. When elements in the drawings are denoted with reference numerals, although the same elements are shown in different drawings, the same elements will be denoted by the same reference numerals. In addition, in the following description of the present disclosure, in a case where the subject matter of the present disclosure may be made unclear, detailed description of known functions and configurations incorporated herein will be omitted.

The terms used herein are only used for the purpose of describing specific embodiments, and are not intended to limit the present disclosure. As used herein, unless otherwise indicated in the context, a singular form is intended to also include a plural form. It will also be understood that, the terms "comprise," "include," and "have" used in the specification are intended to specify existence of the stated features, entities, operations and/or components, but do not exclude existence or addition of one or more other features, entities, operations and/or components.

Unless otherwise defined, all terms including technical terms and scientific terms as used herein have the same meanings as those commonly understood by those skilled in the field to which the present inventive concept belongs. It will be further understood that, terms such as those defined in commonly used dictionaries should be interpreted as having meanings consistent with their meanings in the context of the related field, and should not be interpreted in an idealized or overly formal sense unless they are clearly defined herein.

In the following description, many specific details are set forth to provide a comprehensive understanding of the present disclosure. The present disclosure may be implemented without some or all of these specific details. In other examples, in order to avoid the present disclosure from being obscured due to unnecessary details, only components closely related to the solution according to the present disclosure are shown in the drawings, while other details not closely related to the present disclosure are omitted.

The problem to be solved by the present disclosure is how to interpret processing results of a machine learning model as a high-precision black box model, making it possible to give, for different samples, interpretable results based on the correlation between features.

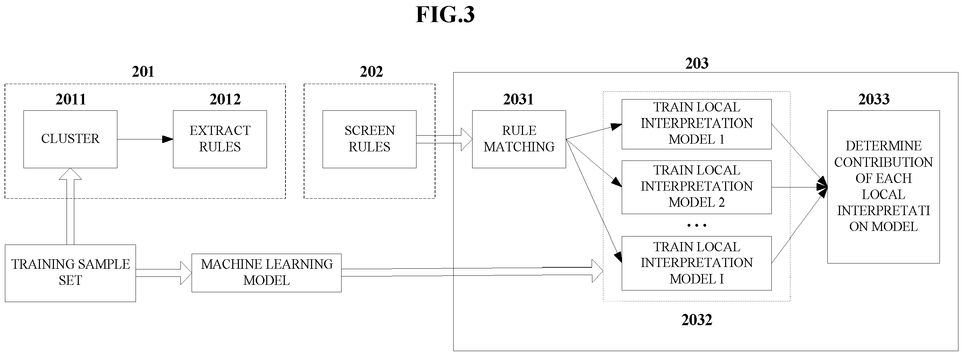

Hereinafter, the configuration and operation of an information processing apparatus according to an embodiment of the present disclosure will be described. FIG. 2 is a block diagram showing the configuration of an information processing apparatus 200 according to an embodiment of the present disclosure. FIG. 3 shows a schematic diagram of processing performed by the information processing apparatus 200 corresponding to FIG. 2.

As shown in FIG. 2, the information processing device 200 according to the embodiment of the present disclosure is used to interpret processing results of a machine learning model.

Herein, description is made by taking the application of the information processing device 200 in the field of finance as an example. For example, a machine learning model as a black box model predicts a customer's income status according to the customer's personal information. Examples of the machine learning model include various artificial intelligence models, such as artificial neural network models. It is summed that the machine learning model is obtained by performing training using a training sample set $D$, a training sample $d$ in the training sample set $D$ is defined to be an $H$-dimensional vector, i.e., to have $H$ features, and is represented as $d=(d_1, d_2, ..., dH)$, where $H$ is a natural number. In the application in the field of finance, the training sample $d$ can represent a customer, whose personal information constitutes an $H$-dimensional vector, each feature $d_h(1 \leq h \leq H)$ in the $H$-dimensional vector can be sex (Sex), age (Age), education level (Education-Num), marital status (Married), wife (Wife), husband (Husband), whether or not there being offspring (Own-child), investment gain (Capital Gain) or financial service state (Service), etc. A trained machine learning model can obtain, for a sample $x=(x_1, x_2, ..., X_H)$ to be tested, its prediction result (target variable) $f(x)$, such as the customer's income status. The object of the information processing apparatus 200 according to the embodiment of the present disclosure is to interpret the prediction result $f(x)$.

According to an embodiment of the present disclosure, the information processing apparatus 200 can comprise an extraction unit 201, a screening unit 202, and an interpretation unit 203.

According to an embodiment of the present disclosure, the extraction unit 201 can extract, based on the machine learning model and a training sample set D of the machine learning model, rules for processing results of the training sample set D.

In interpretable techniques, rule-oriented generation methods often generate rules through global interpretable technique. Global interpretation technique describes a behavior of the entire machine learning model, while rule-based methods usually generate rules through an interpretable "white box" tree structure. However, these rules generated based on the tree structure usually only reflect the overall rule-based target distribution of the training data set, and cannot interpret a single sample to be tested.

Therefore, according to the information processing technique of the present disclosure, rules are first generated through global interpretable technique, and then a set of rules more suitable for serving as local interpretable rules are screened according to different target distributions.

According to an embodiment of the present disclosure, the extraction unit 201 can extract rules using a decision tree method. The decision tree method is used to learn simple decision rules to construct a decision tree, which has strong interpretability. A decision tree is a tree-like structure, in which each internal node represents a judgment about one feature, each branch represents an output of one judgment result, and finally each leaf node represents one classification result. The decision tree method starts from a root node, goes to a next internal node according to a branch judgment, until a leaf node, so as to obtain a final classification result. All branches in this process are connected using logic "AND" operation.

Since the decision tree method is known to those skilled in the art, further detailed description of the details of the decision tree method is omitted herein for the sake of conciseness.

Although the embodiments of the present disclosure use the decision tree method to extract rules, the present disclosure is not limited hereto. Those skilled in the art can envisage using other methods to extract rules under the teaching of the present disclosure.

Taking the application of the information processing apparatus 200 in the field of finance as an example, the extraction unit 201 can extract rules in the form of IF-THEN by the decision tree method, for example, if (IF) the customer is married (for example, feature Married>0.5) and (and) has a higher education level (for example, feature Education-Num>7.5), then (THEN) the customer's income status is better (prediction result) (for example, > $550,000 (50K)).

However, in the decision tree method, the selection of the root node has a certain degree of randomness, and thus compared with a single decision tree, a plurality of decision trees can better generate accurate rules. Meanwhile, if a training sample has many uncorrelated features, the performance of the decision tree is not satisfactory. At this point, the principle of the decision tree is to extract rules layer by layer by finding the correlation between features. Therefore, if the correlation between certain features is stronger but corresponding sample data is less, the decision tree may not be able to extract rules well.

Therefore, according to an embodiment of the present disclosure, the extraction unit 201 can divide the sample set D into mutually irrelevant subsets, i.e., clusters, by a clustering method. For the clusters obtained by the clustering method, feature spaces within the clusters are usually very similar, but output targets are not necessarily the same. Therefore, by generating a plurality of decision trees in each cluster obtained by clustering, rules with closer correlation between different features can be better extracted.

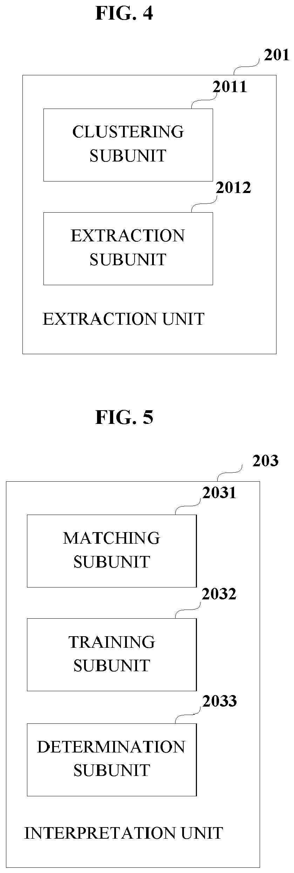

FIG. 4 shows a block diagram of the configuration of the extraction unit 201 as shown in FIG. 2.

According to an embodiment of the present disclosure, as shown in FIG. 4, the extraction unit 201 can comprise a clustering subunit 2011 and an extraction subunit 2012.

According to an embodiment of the present disclosure, the clustering subunit 2011 can cluster the training sample set $D$ to divide the training sample set $D$ into a plurality of clusters. According to an embodiment of the present disclosure, the clustering subunit 2011 can cluster the training sample set D by using a K-means clustering method so as to obtain K clusters. According to an embodiment of the present disclosure, a value of K can be determined according to experience based on specific application scenarios. Taking the application of the information processing apparatus 200 in the field of finance as an example, the value of K can be 4 or 5.

The K-means clustering method is an iterative solution clustering method. Its steps are to first divide sample data into K groups, randomly select K sample data as clustering centers, and then calculate a distance between each sample data and each clustering center, according to which each sample data is allocated to a clustering center at the closest distance to it. Each clustering center and sample data allocated to it constitute one cluster. Each time a sample data is allocated, the clustering center of the cluster will be recalculated according to the existing sample data in the cluster. Iteration of the above process is repeated until a certain termination condition is met. The termination condition can be, for example, that a change in a cluster centering between iterations is less than a certain threshold.

Since the K-means clustering method is known to those skilled in the art, further detailed description of the details of the K-means clustering method is omitted herein for the sake of conciseness.

Although the embodiments of the present disclosure use the K-means clustering method to perform clustering, the present disclosure is not limited hereto. Those skilled in the art can envisage using other methods for clustering under the teaching of the present disclosure.

The extraction subunit 2012 can extract rules from each cluster of the plurality of clusters. According to an embodiment of the present disclosure, the extraction subunit 2012 can extract rules in each cluster by using a decision tree method.

In addition, according to an embodiment of the present disclosure, the extraction subunit 2012 can merge the rules extracted in each cluster to generate a rule list Rulelist, which can be represented as $R1=\{r_1, r_2, ..., r_N\}$, where $N$ represents the total number of the extracted rules. Each rule $r_n(1 \leq n \leq N)$ is formed by connecting a plurality of condition factors s, and is defined as $r_n = S_{n1}{}^\wedge S_{n2}{}^\wedge ... S_n M$, where $M$ is the depth of the decision tree.

Here, each condition factor s can be regarded as a filter of features. Taking the application of the information processing apparatus 200 in the field of finance as an example, it is assumed that a feature $x_1$ in the sample $x=(x_1, x_2, ... , x_H)$ to be tested represents age (Age), and a feature $x_5$ represents marital status (Married). In addition, assuming that the depth of the decision tree is 2, rule $r_1 = s_{11}{}^\wedge s_{12}$ is extracted, for example, $s_{11}$ can represent the age being less than or equal to 28, that is, $x_1 \leq 28$, and $s_{12}$ can represent married, that is, $x_5 =$"Married" or $x_5 > 0.5$ (which represents married when it is greater than 0.5, and represents unmarried when it is less than or equal to 0.5), then the rule $r_1$ can be represented as $x_1 \leq 28$ and (and) $x_5 =$"Married" or >0.5.

Those skilled in the art should recognize that, the clustering processing performed by the clustering subunit 2011 is not necessary. In other embodiments of the present disclosure, it is possible to directly extract rules based on the training sample set D as a whole without clustering the training sample set D.

Although the rules $R1$ are obtained by the extraction unit 201, since the distribution of the training sample set D may be uneven, the quality of the extracted rules $R1$ cannot be guaranteed, and thus it is necessary to screen the rules $R1$ based on the overall distribution of the training sample set D.

According to an embodiment of the present disclosure, the screening unit 202 can screen, based on the distribution of the training sample set D and the distribution of the rules $R1$ extracted by the extraction unit 201, the rules $R1$ extracted by the extraction unit 201.

According to an embodiment of the present disclosure, the screening unit 202 can set, based on the distribution of the training sample set D and the distribution of the rules $R1$ extracted by the extraction unit 201, an index reflecting the quality of the rules $R1$ extracted by the extraction unit 201, and to screen the rules $R1$ extracted by the extraction unit according to the index.

At this point, the index should be set by considering both the inter-class data distribution and the intra-class data distribution of the rules. It should be noted that, the "classes" mentioned here represent labels of training samples in the training sample set D, i.e., processing results (prediction results) of a machine learning model trained by using the training sample set *D* on the training sample set *D.*

According to an embodiment of the present disclosure, $cover_D(r)$ can be defined to represent a set of training samples conforming to rules r in the training sample set *D,* and *l* can be defined to represent target variables (labels) in the training sample *set D, l∈{1,2,...,L},* where *L* is the number of the classes (labels). In addition, $D_l$ can be defined to represent a set of training samples with target variables being *l* in the training sample set *D.* Accordingly, a ratio $\theta_l$ of training samples covered by the rules r in the class *l* can be defined according to the following equation (1).

$$\theta_\ell = \frac{\left|cover_{D_\ell}(r)\right|}{\left|C_{D_\ell} cover_{D_\ell}(r)\right|}$$    Equation (1)

nt set, and $|\cdot|$ represents the number of elements

in the set. Therefore, in the equation (1), the numerator represents the number of training samples with labels being *l* and conforming to the rules r in the training sample set *D,* and the denominator represents training samples with labels being *l* and not conforming to the rules r in the training sample set D.

It should be noted that, in the equation (1), when the denominator is zero, i.e., when the number of the training samples with labels being *l* and not conforming to the rules r in the training sample set D is zero, it means that the rules r cover all the training samples with labels being *l* in the training sample set *D,* are high-quality rules, and thus the rules r directly passes screening.

According to the ratio $\theta_l$, an index for comparing the quality of the training samples covered by the inter-class and intra-class rules *r*, i.e., an index max_ration(*r*) reflecting the quality of the rules r extracted by the extraction unit 201, can be set according to the following equation (2).

$$\text{max\_ratio}(r) = \max_\ell \left(\frac{\theta_\ell}{\theta_{-\ell}}\right)$$    Equation (2)

l, and the calculation of $\theta_{-l}$ is similar to the

calculation of $\theta_l$ given by the above equation (1), with a difference in that the numerator represents the number of training samples with labels not being *l* and conforming to the rules *r* in the training sample set D, and the denominator represents the number of training samples with labels not being *l* and not conforming to the rules r in the training sample set *D.*

The index max_ration(*r*) can reflect the quality of the rules r. The larger the value of max_ration(*r*), the better the quality of the rules r. According to an embodiment of the present disclosure, a threshold of the index max_ration(*r*) can be set, according to which the rules *R1* extracted by the extraction unit 201 can be screened, to retain rules with the index max_ration(*r*) being greater than the threshold and filter out other rules, so as to obtain rules R2 screened by the screening unit 202.

According to an embodiment of the present disclosure, the interpretation unit 203 can use the rules *R2* screened by the screening unit 202 to interpret processing results *f(x)* of the machine learning model on the single sample $x=(x_1,x_2,...,x_H)$ to be tested.

FIG. 5 shows a block diagram of the configuration of the interpretation unit as shown in FIG. 2. According to an embodiment of the present disclosure, the interpretation unit 203 can comprise a matching subunit 2031, a training subunit 2032, and a determination subunit 2033.

According to an embodiment of the present disclosure, the matching subunit 2031 can determine a rule $R_x$ matching the single sample x to be tested among the rules *R2* screened by the screening unit 202, wherein $R_x$ represents a set of rules $r_i$ that the sample x to be tested conforms to among the rules *R2* screened by the screening unit 202. Specifically, $R_x$ can be represented by the following equation (3).

$$\mathcal{R}_x = \bigcup_{r_i \in \mathcal{R}2} \{r_i | x \in cover(r_i)\}$$    Equation (3)

$\bigcup$ " represents a union.

As described above, the rule $r_i$ can be represented as $r_i = si_1 \wedge s_{i2} \wedge ... \wedge S_{iM}$. Generally, each feature $x_h$ in the sample $x=(x_1,x_2, ...,x_H)$ to be tested belongs to a corresponding interval, and thus the condition factor $S_{im}$ can be represented

by the following equation (4).

$$s_{im} = (x_{im}, range_{im})$$ 

Equation (4)

Where $x_{im}$ is a feature corresponding to the condition factor $s_{im}$ in the sample x to be tested, and $range_{im}$ is an interval $(l_{im}, u_{im}]$ corresponding to the condition factor $s_{im}$, where $l_{im}$ is a lower limit of the interval, and $u_{im}$ is an upper limit of the interval. Taking the application of the information processing apparatus 200 in the field of finance as an example, it is assumed that a feature $x_1$ in the sample $x=(x_1, x_2, ..., x_H)$ to be tested represents age (Age) and the sample x to be tested conforms to a rule $r_2=s_{21}{\wedge}s_{22}$, for example, $s_{21}$ can represent the age being greater than 28 and less than 35. Assuming that in this example, the feature $x_1$ in the sample x to be tested corresponds to the condition factor $s_{21}$, then $range_{21}$, i.e., the interval $(l_{21}, u_{21}]$ corresponding to the condition factor $s_{21}$, is (28, 35].

In addition, for example, $s_{22}$ can represent that the education level (Education-Num) is higher than the level of high school and lower than the level of master (for example, $7.5<$Education-Num$\leq12.5$). Assuming that in this example, a feature $x_4$ in the sample x to be tested corresponds to the condition factor $s_{22}$, then $range_{22}$, i.e., the interval $(l_{22}, u_{22}]$ corresponds to the condition factor $s_{22}$, is (7.5, 12.5].

Conversely, as described above, the rule $r_2=s_{21}{\wedge}s_{22}$ can be represented as $28<x1 \leq 35$ and (and) $7.5<x_4\leq12.5$. If the features $x_1$ and $x_4$ in the sample x to be tested meet the above conditions, then the sample x to be tested is considered as conforming to the rule $r_2$.

According to an embodiment of the present disclosure, a definition $z_i(x)\in\{0,1\}$ represents whether the sample x to be tested conforms to the rule $r_i$, wherein if it conforms to the rule $r_i$, then $z_i(x)=1$, and if it does not conform to the rule $r_i$, then $z_i(x)=0$, which can be represented by the following equation (5).

$$z_i(x) = \prod_{m=1}^{M} 1_{range_{im}} x_{im}$$

Equation (5)

accumulative multiplication. $1 range_{im}$ represents an indictor function of $range_{im}$, and its specific definition is as shown by the following equation (6).

$$1_{range_{im}} x_{im} = \begin{cases} 1, & if\ x_{im} \in range_{im} \\ 0, & if\ x_{im} \notin range_{im} \end{cases}$$

Equation (6)

subunit 2032 can train, for each of the rules $R_x$ determined by the matching subunit 2031, a local interpretation model by using the training sample set D and the processing results $f(d)$ of the machine learning model.

According to an embodiment of the present disclosure, a linear regression model can be trained, as a local interpretation model, for each rule that the sample x to be tested conforms to which is determined by the matching subunit 2031.

According to an embodiment of the present disclosure, the linear regression model can be a generalized additive model. Specifically, the generalized additive model $g_i(d)$ performs fitting by using a feature $d_h$ of a training sample $d=(d_1, d_2, ..., d_H)$ belonging to a set $cover_D(r_i)$ and the rules that it conforms to, and thus takes the form as shown by the following equation (7):

$$g_i(d) = \alpha_0 + \sum_{h=1}^{H} \alpha_h d_h + \sum_{i=1}^{J} \beta_j z_j(d)$$

Equation (7)

where $1\leq i\leq J$, $1\leq j\leq J$, $1-J-|R_x|$.

When j=i, $\beta_j=0$, this is because that in the set $cover_D(r_i)$, according to the definition of $z_i(x)$ given above, the $z_i(x)$ of all samples are 1, and thus there is no need for entering it into the above equation.

In the above equation (7), the first term $\alpha_0$ on the right side is a bias term, the second term is related to the feature of the training sample $d$ in the training sample set $D$ and it has a coefficient $\alpha$, and the third term is related to the rule and it has a coefficient $\beta$. As shown in the above equation (7), the generalized additive model is trained by using the training sample set D.

According to an embodiment of the present disclosure, the training subunit 2032 can train the generalized additive model of the above equation (7) by using a ridge regression method. Specifically, the generalized additive model is trained by using the ridge regression model as a loss function thereof. The loss function takes the form as shown in the following equation (8).

$$\mathcal{L}_i(f, g_i) = \sum_{d \in cover_D(r_i)} \left(f(d) - g_i(d)\right)^2 + \lambda \left(\sum_{h=1}^{H} \alpha_h{}^2 + \sum_{j=1}^{J} \beta_j{}^2\right) \qquad \text{Equation (8)}$$

model. According to an embodiment of the present disclosure, in the above equation (8), in order to train the local interpretation model, the training subunit 2032 uses the training sample set D and the processing results (prediction results) $f(d)$ of the machine learning model on the training sample set D.

Since the generalized additive model and the ridge regression model are known to those skilled in the art, further detailed descriptions of the details of the generalized additive model and the ridge regression model are omitted herein for the sake of conciseness.

Although the embodiments of the present disclosure use a generalized additive model and a ridge regression model to obtain a local interpretation model, the present disclosure is not limited hereto. Those skilled in the art can envisage using other linear regression methods to obtain a local interpretation model under the teaching of the present disclosure.

According to an embodiment of the present disclosure, the determination subunit 2033 can determine, based on the local interpretation model trained by the training subunit 2032, a contribution of the rule matching the single sample x to be tested. According to an embodiment of the present disclosure, the coefficients $\alpha$ and $\beta$ related to the rules in the above formula (7) can be obtained through training, thereby generating one local interpretation model for each of the rules $R_x$ matching the single sample x to be tested, so as to obtain a total of $I=|R_x|$ local interpretation models.

According to an embodiment of the present disclosure, the determination subunit 2033 can obtain the contribution degree w(x) of each local interpretation model according to the following equation (8).

$$w(x) - \bigcup_j{}^J \frac{\sum_{i=1}^{I} Norm(\beta_{ij})}{I \ 1} \qquad \text{Equation (8)}$$

where $Norm()$ represents 1

normalization in the interval [-1,1]. As shown in the above equation (8), the contribution degree w(x) of each local interpretation model for the sample x to be tested is determined by the coefficient $\beta$ related to the rules.

According to an embodiment of the present disclosure, the determination subunit 2033 can fuse, based on the contribution w(x) of the rule $R_x$ matching the single sample x to be tested, local interpretation models corresponding to the rule $R_x$ matching the single sample x to be tested.

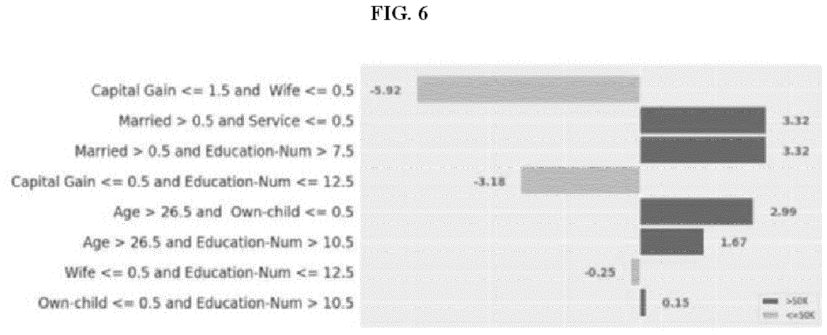

FIG. 6 shows a diagram of an example of processing results of the information processing apparatus according to an embodiment of the present disclosure. The processing result is described by taking the application of the information processing apparatus 200 in the field of finance as an example. As shown in FIG. 6, the sample x to be tested has at least the following features: age (Age), education level (Education-Num), marital status (Married), wife (Wife), whether there being offspring (Own-child), investment gain (Capital Gain), financial service status (Service). The left side of FIG. 6 shows the respective rules $R_x$ matching the sample x to be tested, and the right side of FIG. 6 shows corresponding contributions of the respective rules to the prediction result. The purpose of prediction is to determine whether an income status of the sample x to be tested, i.e., the customer, is greater than $50K, for example.

As shown in FIG. 6, the rule Married>0.5 and Service<=0.5 and the rule Married>0.5 and Education-Num>7.5 have the largest contribution to the prediction result that the income status is greater than $50K, while the rule Capital Gain<=1.5 and Wife<=0.5 has the largest contribution to the prediction result that the income status is less than $50K.

As can be seen from the above, the information processing apparatus 200 according to the embodiment of the present disclosure can interpret processing results of a machine learning model as a high-precision black box model, and it can give, for different samples, interpretable results based on the correlation (i.e., rules) between features. Here, those skilled in the art should realize that, if the depth M of the decision tree used by the extraction unit 201 is set to 1, an obtained local interpretation model can be degenerated to give interpretable results based on a single feature of a sample to be tested.

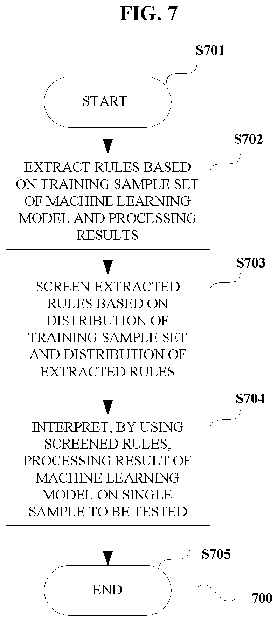

FIG. 7 is a flowchart showing processing of an information processing method 700 according to an embodiment of the present disclosure.

The information processing method 700 starts at step S701. Subsequently, in step S702, rules are extracted, based on a machine learning model and a training sample set of the machine learning model, for processing results of the training sample set. According to an embodiment of the present disclosure, the processing in step S702 can be implemented by, for example, the extraction unit 201 as described above with reference to FIGS. 2 to 6, and thus details thereof will not be repeatedly described here.

Subsequently, in step S703, the extracted rules are screened based on the distribution of the training sample set and the distribution of the rules extracted by the extraction unit. The processing in step S703 can be implemented by, for example, the screening unit 202 as described above with reference to FIGS. 2 to 6, and thus details thereof will not be repeatedly described here.

Subsequently, in step S704, a processing result of the machine learning model on a single sample to be tested is interpreted by using the rules screened by the screening unit. According to an embodiment of the present disclosure, the processing in step S704 can be implemented by, for example, the interpretation unit 203 as described above with reference to FIGS. 2 to 6, and thus details thereof will not be repeatedly described here.

Finally, the information processing method 700 ends at step S705.

According to the information processing technique of the present disclosure, the diversity of the rules can be improved by performing clustering processing on training samples in a training sample set, and constructing a plurality of decision trees in each cluster obtained through the clustering processing to generate a plurality of rules. In addition, rules that are more important for the interpretation of the prediction results can be selected by considering the inter-class data distribution and the intra-class data distribution of the rules to screen the rules. Furthermore, rule-based interpretations of prediction results of a machine learning model can be obtained by generating, for a single sample to be tested, a plurality of local interpretation models in one-to-one correspondence to rules matching it. Therefore, according to the information processing technique of the present disclosure, it is possible to extract rules-based interpretable results being more conducive to human understanding by first globally extracting the rules and then returning to local interpretations of a single sample instance. Therefore, according to the information processing technique of the present disclosure, it is possible to give, for a high-precision black box model, processing results on different samples based on the correlation between features of the samples.

Although description has been made herein by taking the application of the information processing technique of the present disclosure in the field of finance as an example, the present disclosure is not limited hereto. The information processing technique of the present disclosure can be widely used in fields such as security, transportation, medical treatment, industrial control and the like.

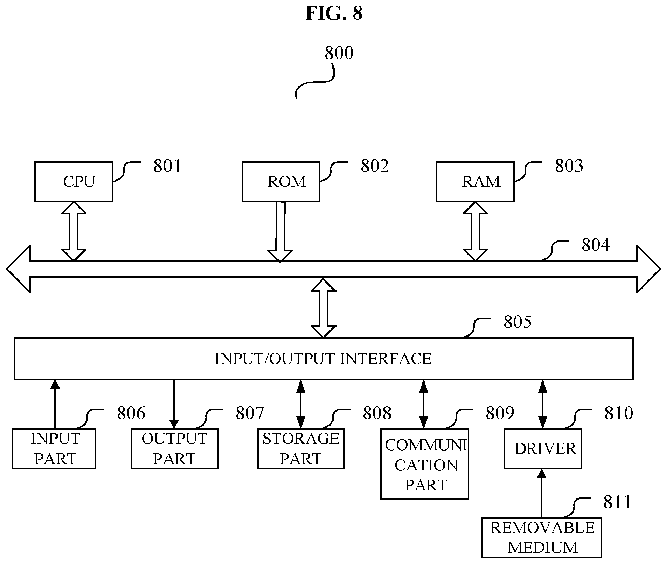

FIG. 8 shows a schematic structural diagram of a general-purpose machine 800 used to implement an information processing method and an information processing apparatus according to an embodiment of the present disclosure. The general-purpose machine 800 can be, for example, a computer system. It should be noted that, the general-purpose machine 800 is only an example, and does not imply limitations to the use range or function of the information processing method and information processing apparatus of the present disclosure. The general-purpose machine 800 should not be construed as having a dependency or requirement on any component or combination thereof as shown in the above-mentioned information processing method or information processing apparatus, either.

In FIG. 8, an Central Processing Unit (i.e., CPU) 801 executes various processing according to a program stored in a Read-Only Memory (ROM) 802 or a program uploaded from a storage part 808 to a Random Access Memory (RAM) 803. In the RAM 803, data needed when the CPU 801 executes various processing and the like is also stored as needed. The CPU 801, the ROM 802 and the RAM 803 are linked to each other via a bus 804. An input/output interface 805 is also linked to the bus 804.

The following components are linked to the input/output interface 805: an input part 806 (including a keyboard, a mouse and the like), an output part 807 (including a display, such as a Cathode Ray Tube (CRT), a Liquid Crystal Display (LCD) and the like, as well as a speaker and the like), the storage part 808 (including a hard disc and the like), and a communication part 809 (including a network interface card such as an LAN card, a modem and the like). The communication part 809 executes communication processing via a network such as the Internet. As needed, a driver 810 may also be linked to the input/output interface 805. A detachable medium 811 such as a magnetic disc, an optical disc, a magnetic optical disc, a semiconductor memory and the like is installed on the driver 810 as needed, such that a computer program read therefrom is installed in the storage part 808 as needed.

In a case where the above series of processing is implemented by software, a program constituting the software is installed from a network such as the Internet or a storage medium such as the detachable medium 811.

Those skilled in the art should appreciate that such a storage medium is not limited to the detachable medium 811 having stored therein a program and distributed separately from an apparatus to provide the program to a user as shown in FIG. 8. Examples of the detachable medium 811 include a magnetic disc (including a floppy disc (registered trademark)), a compact disc (including a Compact Disc Read-Only Memory (CD-ROM) and a Digital Versatile Disc (DVD), a magneto optical disc (including a Mini Disc (MD) (registered trademark)), and a semiconductor memory. Alternatively, the storage medium may be hard discs and the like included in the ROM 802 and the storage part 808, in which programs are stored, and which are distributed concurrently with the apparatus including them to users.

In addition, the present disclosure further proposes a program product having stored thereon machine readable instruction codes that, when read and executed by a machine, can implement the above-mentioned information processing method according to the present disclosure. Accordingly, the above-listed various storage media for carrying such a program product are also included in the scope of the present disclosure.

Specific embodiments of the apparatus and/or method according to the present disclosure have been explicitly described by making detailed description by way of block diagrams, flowcharts and/or embodiments above. When these block diagrams, flowcharts and/or embodiments include one or more functions and/or operations, those skilled in the art appreciate that, the respective functions and/or operations in these block diagrams, flowcharts and/or embodiments may be implemented separately and/or jointly through various hardware, software, firmware, or substantially any combination thereof. In one embodiment, several portions of the subject matter described in this specification may be implemented through an Application Specific Integrated circuit (ASIC), a Field Programmable Gate Array (FPGA), a Digital Signal Processor (DSP) or other integration manners. However, those skilled in the art will recognize that, some aspects of the embodiments described in this specification may be equivalently implemented in whole or in part in the form of one or more computer programs running on one or more computers (for example, in the form of one or more computer programs running on one or more computer systems), in the form of one or more programs running on one or more processors (for example, in the form of one or more programs running on one or more microprocessors), in the form of firmware, or in the form of substantially any combination thereof, and moreover, according to the contents disclosed in this specification, designing a circuit for the present disclosure and/or writing codes for software and/or firmware of the present disclosure is completely within the ability of those skilled in the art.

It should be emphasized that, the term "comprise/include" used herein refers to existence of features, elements, steps or assemblies, but does not exclude existence or addition of one or more other features, elements, steps or assemblies. Terms "first" , "second" and the like relating to ordinal numbers do not represent implementation orders or importance degrees of the features, elements, steps or assemblies defined by these terms, but aim only to perform identification among these features, elements, steps or assemblies for the sake of clarity.

In conclusion, the embodiments according to the present disclosure provide the following technical solutions, but are not limited to these technical solutions:

Solution 1: An information processing apparatus for interpreting processing results of a machine learning model, the information processing apparatus comprising:

an extraction unit configured to extract, based on the machine learning model and a training sample set of the machine learning model, rules for processing results of the training sample set;

a screening unit configured to screen, based on the distribution of the training sample set and the distribution of the rules extracted by the extraction unit, the rules extracted by the extraction unit; and

an interpretation unit configured to interpret, by using the rules screened by the screening unit, a processing result of the machine learning model on a single sample to be tested.

Solution 2. The information processing apparatus according to solution 1, wherein the extraction unit is configured to extract the rules by using a decision tree method.

Solution 3. The information processing apparatus according to solution 1 or 2, wherein the extraction unit comprises:

a clustering subunit configured to cluster the training sample set to divide the training sample set into a plurality of clusters; and

an extraction subunit configured to extract rules from each cluster of the plurality of clusters.

Solution 4. The information processing apparatus according to solution 3, wherein the extraction subunit is configured to extract rules in each cluster by using a decision tree method.

Solution 5. The information processing apparatus according to solution 4, wherein the extraction subunit is configured to generate a plurality of decision tress for each cluster.

Solution 6. The information processing apparatus according to solution 1 or 2, wherein the screening unit is configured to set, based on the distribution of the training sample set and the distribution of the rules extracted by the extraction unit, an index reflecting the quality of the rules extracted by the extraction unit, and to screen the rules extracted by the extraction unit according to the index.

Solution 7. The information processing apparatus according to solution 1 or 2, wherein the interpretation unit comprises:

a matching subunit configured to determine a rule matching the single sample to be tested among the rules screened by the screening unit;

a training subunit configured to train, for each of the rules determined by the matching subunit, a local interpretation model by using the training sample set and the processing results of the machine learning model; and

a determination subunit configured to determine, based on the local interpretation model trained by the training subunit, a contribution of the rule matching the single sample to be tested.

Solution 8. The information processing apparatus according to solution 7, wherein the local interpretation model trained by the training subunit is a generalized additive model.

Solution 9. The information processing apparatus according to solution 8, wherein the training subunit is configured to train the generalized additive model by using a ridge regression method.

Solution 10. The information processing apparatus according to solution 7, wherein the determination subunit is configured to fuse, based on the contribution of the rule matching the single sample to be tested, local interpretation models corresponding to the rule matching the single sample to be tested.

Solution 11. An information processing method for interpreting processing results of a machine learning model, the information processing method comprising the steps of:

extracting, based on the machine learning model and a training sample set of the machine learning model, rules for processing results of the training sample set;

screening, based on the distribution of the training sample set and the distribution of the rules extracted by the extraction unit, the extracted rules; and

interpreting, by using the screened rules, a processing result of the machine learning model on a single sample to be tested.

Solution 12. The information processing method according to solution 11, wherein the rules are extracted by using a decision tree method.

Solution 13. The information processing method according to solution 11 or 12, wherein extracting the rules comprises:

clustering the training sample set to divide the training sample set into a plurality of clusters; and

extracting rules from each cluster of the plurality of clusters.

Solution 14. The information processing method according to solution 13, wherein the rules are extracted in each cluster by using a decision tree method.

Solution 15. The information processing method according to solution 14, wherein a plurality of decision trees are generated for each cluster.

Solution 16. The information processing method according to solution 11 or 12, wherein an index reflecting the quality of the extracted rules is set based on the distribution of the training sample set and the distribution of the extracted rules, and the extracted rules are screened according to the index.

Solution 17. The information processing method according to solution 11 or 12, wherein the interpreting for the processing result comprises:

determining a rule matching the single sample to be tested among the screened rules;

training a local interpretation model for each of the determined rules; and

determining, based on the trained local interpretation model, a contribution of the rule matching the single sample to be tested.

Solution 18. The information processing method according to solution 17, wherein the trained local interpretation model is a generalized additive model.

Solution 19. The information processing method according to solution 18, wherein the generalized additive model is trained by using a ridge regression method.

Solution 20. A computer readable storage medium having stored thereon a program that, when executed by the computer, causes the computer to implement an information processing method for interpreting processing results of a machine learning model, the information processing method comprising the steps of:

extracting, based on the machine learning model and a training sample set of the machine learning model, rules for processing results of the training sample set;

screening, based on the distribution of the training sample set and the distribution of the rules extracted by the extraction unit, the extracted rules; and

interpreting, by using the screened rules, a processing result of the machine learning model on a single sample to be tested.

Although the present disclosure has been disclosed above by way of description of the specific embodiments of the present disclosure, it should be noted that those skilled in the art can design various modifications, improvements or equivalents for the embodiments of the present disclosure within the spirit and scope of the appended claims. These modifications, improvements or equivalents should also be regarded as being included within the scope of protection of the present disclosure.

## Claims

1. An information processing apparatus for interpreting processing results of a machine learning model, the information processing apparatus comprising:

   an extraction unit configured to extract, based on the machine learning model and a training sample set of the machine learning model, rules for processing results of the training sample set;
   a screening unit configured to screen, based on the distribution of the training sample set and the distribution of the rules extracted by the extraction unit, the rules extracted by the extraction unit; and
   an interpretation unit configured to interpret, by using the rules screened by the screening unit, a processing result of the machine learning model on a single sample to be tested.

2. The information processing apparatus according to claim 1, wherein the extraction unit is configured to extract the rules by using a decision tree method.

3. The information processing apparatus according to claim 1 or 2, wherein the extraction unit comprises:

   a clustering subunit configured to cluster the training sample set to divide the training sample set into a plurality of clusters; and
an extraction subunit configured to extract rules from each cluster of the plurality of clusters.

4. The information processing apparatus according to claim 3, wherein the extraction subunit is configured to extract rules in each cluster by using a decision tree method.

5. The information processing apparatus according to claim 4, wherein the extraction subunit is configured to generate a plurality of decision tress for each cluster.

6. The information processing apparatus according to claim 1 or 2, wherein the screening unit is configured to set, based on the distribution of the training sample set and the distribution of the rules extracted by the extraction unit, an index reflecting the quality of the rules extracted by the extraction unit, and to screen the rules extracted by the extraction unit according to the index.

7. The information processing apparatus according to claim 1 or 2, wherein the interpretation unit comprises:

a matching subunit configured to determine a rule matching the single sample to be tested among the rules screened by the screening unit;
a training subunit configured to train, for each of the rules determined by the matching subunit, a local interpretation model by using the training sample set and the processing results of the machine learning model; and
a determination subunit configured to determine, based on the local interpretation model trained by the training subunit, a contribution of the rule matching the single sample to be tested.

8. The information processing apparatus according to claim 7, wherein the local interpretation model trained by the training subunit is a generalized additive model.

9. The information processing apparatus according to claim 8, wherein the training subunit is configured to train the generalized additive model by using a ridge regression method.

10. The information processing apparatus according to claim 7, wherein the determination subunit is configured to fuse, based on the contribution of the rule matching the single sample to be tested, local interpretation models corresponding to the rule matching the single sample to be tested.

11. An information processing method for interpreting processing results of a machine learning model, the information processing method comprising the steps of:

extracting, based on the machine learning model and a training sample set of the machine learning model, rules for processing results of the training sample set;
screening, based on the distribution of the training sample set and the distribution of the rules extracted by the extraction unit, the extracted rules; and
interpreting, by using the screened rules, a processing result of the machine learning model on a single sample to be tested.

12. The information processing method according to claim 11, wherein the rules are extracted by using a decision tree method.

13. The information processing method according to claim 11 or 12, wherein extracting the rules comprises:

clustering the training sample set to divide the training sample set into a plurality of clusters; and
extracting rules from each cluster of the plurality of clusters.

14. The information processing method according to claim 13, wherein the rules are extracted in each cluster by using a decision tree method.

15. A computer readable storage medium having stored thereon a program that, when executed by the computer, causes the computer to implement an information processing method for interpreting processing results of a machine learning model, the information processing method comprising the steps of:

extracting, based on the machine learning model and a training sample set of the machine learning model, rules for processing results of the training sample set;

screening, based on the distribution of the training sample set and the distribution of the rules extracted by the extraction unit, the extracted rules; and

interpreting, by using the screened rules, a processing result of the machine learning model on a single sample to be tested.

**FIG. 1**

```
┌──────────────┐         ┌──────────────────┐  PROCESSING  ┌──────────────┐
│   TRAINING   │─────────▶│     MACHINE      │─────────────▶│              │
│  SAMPLE SET  │         │  LEARNING MODEL  │              │  PREDICTION  │
│              │         └──────────────────┘              │    RESULT    │
│              │─────────▶┌──────────────────┐ INTERPRETING │              │
└──────────────┘         │   INTERPRETER    │─────────────▶│              │
                         └──────────────────┘              └──────────────┘
```

**FIG. 2**

200

201

EXTRACTION UNIT

202

SCREENING UNIT

203

INTERPRETATION UNIT

INFORMATION PROCESSING APPARATUS

# FIG.3

EP 4 002 230 A1

**FIG. 4**

201

2011

CLUSTERING
SUBUNIT

2012

EXTRACTION
SUBUNIT

EXTRACTION UNIT

**FIG. 5**

203

2031

MATCHING
SUBUNIT

2032

TRAINING
SUBUNIT

2033

DETERMINATION
SUBUNIT

INTERPRETATION UNIT

## FIG. 6

| Rule | Value |
|---|---|
| Capital Gain <= 1.5 and Wife <= 0.5 | -5.92 |
| Married > 0.5 and Service <= 0.5 | 3.32 |
| Married > 0.5 and Education-Num > 7.5 | 3.32 |
| Capital Gain <= 0.5 and Education-Num <= 12.5 | -3.18 |
| Age > 26.5 and Own-child <= 0.5 | 2.99 |
| Age > 26.5 and Education-Num > 10.5 | 1.67 |
| Wife <= 0.5 and Education-Num <= 12.5 | -0.25 |
| Own-child <= 0.5 and Education-Num > 10.5 | 0.15 |

>50K
<=50K

**FIG. 7**

S701

START

S702

EXTRACT RULES BASED
ON TRAINING SAMPLE SET
OF MACHINE LEARNING
MODEL AND PROCESSING
RESULTS

S703

SCREEN EXTRACTED
RULES BASED ON
DISTRIBUTION OF
TRAINING SAMPLE SET
AND DISTRIBUTION OF
EXTRACTED RULES

S704

INTERPRET, BY USING
SCREENED RULES,
PROCESSING RESULT OF
MACHINE LEARNING
MODEL ON SINGLE
SAMPLE TO BE TESTED

S705

END

700

**FIG. 8**

800

| CPU 801 | ROM 802 | RAM 803 |

804

INPUT/OUTPUT INTERFACE 805

| INPUT PART 806 | OUTPUT PART 807 | STORAGE PART 808 | COMMUNICATION PART 809 | DRIVER 810 |

REMOVABLE MEDIUM 811

Europäisches Patentamt

European Patent Office

Office européen des brevets

# EUROPEAN SEARCH REPORT

Application Number

**EP 21 20 2388**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/156216 A1 (GUPTA PIYUSH [IN] ET AL) 23 May 2019 (2019-05-23) * paragraph [0013] – paragraph [0027]; figure 3 * ----- | 1-15 | INV. G06N20/00 G06N5/00 G06N5/02 G06N5/04 |

TECHNICAL FIELDS SEARCHED (IPC)

**G06N**

The present search report has been drawn up for all claims

| Place of search | Date of completion of the search | Examiner |
|---|---|---|
| The Hague | 25 March 2022 | Falco, Gabriele |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 20 2388

This annex lists the patent family members relating to the patent documents cited in the above-mentioned European search report.
The members are as contained in the European Patent Office EDP file on
The European Patent Office is in no way liable for these particulars which are merely given for the purpose of information.

25-03-2022

| Patent document cited in search report | Publication date | Patent family member(s) | Publication date |
|---|---|---|---|
| US 2019156216 A1 | 23-05-2019 | NONE | |

For more details about this annex : see Official Journal of the European Patent Office, No. 12/82